# EUROPEAN PATENT APPLICATION

(11) **EP 4 597 526 A1**
(43) Date of publication of application: **06.08.2025**
(21) Application number: 23872222.7
(22) Date of filing: 25.09.2023
(51) Int. Cl.: H01B 13/012, H01B 7/00, H02G 1/06

(54) **WIRE HARNESS BUNDLING DEVICE**

(30) Priority: 27.09.2022 JP 2022153739
(71) Applicant: Muscle Corporation, Osaka-shi, Osaka 541-0042 (JP)
(72) Inventor: TAMAI Hirofumi, Osaka-shi Osaka 541-0042 (JP)
(74) Representative: Herrero & Asociados, S.L.
(86) International application number: PCT/JP2023/034629
(87) International publication number: WO 2024/070997

(57) **Abstract**

Provided is a wire harness binding apparatus that is capable of automating and speeding up the work of binding a plurality of wires with a binding material by successively binding the wires with the binding material, and that forms a wire harness capable of suppressing a decrease in the binding force that binds the wires. The apparatus includes a wire rod supply unit for supplying a wire rod near an object to be bound, and a ring shape forming unit for forming a ring-shaped part by curving a portion of the wire rod supplied from the wire rod supply unit. The ring shape forming unit successively forms a plurality of ring-shaped parts with the wire rod supplied from the wire rod supply unit, arranges the plurality of ring-shaped parts along the longitudinal direction of the object to be bound, and forms a binding material by connecting adjacent ring-shaped parts along the longitudinal direction of the object to be bound.

## Description

### Technical Field

The present invention relates to a wire harness binding apparatus that forms a wire harness obtained by binding an object to be bound, which includes a plurality of wires, with a binding material constituted by a flexible wire rod.

### Background Art

Automobiles and various mechanical devices conventionally use wire harnesses obtained by binding a plurality of wires, optical fibers, or the like (which are referred to collectively as "wires") for power supply and signal communication. The process of producing a wire harness involves the work of binding a plurality of wires with a binding material such as adhesive tape.

It is very time consuming for workers to manually bind the wires with the binding material. In addition, the quality of wire harnesses may vary due to different skill levels of different workers. For this reason, a wire harness manufacturing apparatus has been proposed that automates the work of binding the wires with the binding material.

For example, in a wire harness manufacturing apparatus disclosed in Patent Document 1, a tape winding device moves freely in the three-dimensional directions relative to a bundle of a plurality of wires placed in a harness wiring device to wind the tape around the wires.

The wire harness manufacturing apparatus of Patent Document 1 can automate the work of binding wires with adhesive tape. However, the wire harness manufacturing apparatus of Patent Document 1 winds the adhesive tape around one location at a time and cuts the adhesive tape after each winding around one location. Thus, the wire harness manufacturing apparatus of Patent Document 1 cannot continuously wind the adhesive tape around the wires, and the work of binding a plurality of wires with a binding material is time-consuming.

Meanwhile, a wire harness manufacturing apparatus has also been proposed that speeds up the work of binding a plurality of wires by using a binding material other than adhesive tape. For example, the wire harness manufacturing apparatus disclosed in Patent Document 2 uses a filament such as a thread or a string as a binding material. In this wire harness manufacturing apparatus, a bundle of wires moves in a longitudinal direction, and the filament is helically wound around the bundle of wires due to the rotation of an idle reel that supplies the filament around the wires.

The wire harness manufacturing apparatus of Patent Document 2 binds the wires by helically winding a filament such as a thread or a string, which is a continuous body, around the wires, thereby speeding up the work of binding wires with a binding material.

### Citation List

### Patent Documents

Patent Document 1: JP 2008-192456A
Patent Document 2: JP H6-5031A

### Summary of Invention

### Technical Problem

However, in the wire harness manufacturing apparatus of Patent Document 2, the filament helically wound around the wires is not fixed to the wires as in the case of adhesive tape, and there is no fixing portion such as a knot that maintains the helical form. Thus, the position of the filament relative to the wires may shift, the helical shape may not be maintained, and there is a concern that the binding force that binds the wires may be reduced.

An object of the present invention is to provide a wire harness binding apparatus that is capable of automating and speeding up the work of binding a plurality of wires with a binding material by successively binding the plurality of wires with the binding material, and that forms a wire harness capable of suppressing a decrease in the binding force that binds the wires.

### Solution to Problem

A wire harness binding apparatus of the present invention is a wire harness binding apparatus that forms a wire harness by binding an object to be bound that includes a plurality of wires, with a binding material constituted by a flexible wire rod, and the apparatus includes:
a wire rod supply unit for supplying the wire rod near the object to be bound; and
a ring shape forming unit for forming the ring-shaped part by curving a portion of the wire rod supplied from the wire rod supply unit,
wherein the ring shape forming unit forms the binding material by successively forming a plurality of ring-shaped parts in the wire rod supplied by the wire rod supply unit, arranging the plurality of ring-shaped parts along a longitudinal direction of the object to be bound, and coupling adjacent ring-shaped parts, of the plurality of ring-shaped parts, to each other along the longitudinal direction of the object to be bound.

### Advantageous Effects of Invention

The wire harness binding apparatus according to the present invention is capable of automating and speeding up the work of binding a plurality of wires with a binding material by successively binding the wires with the binding material, and is capable of suppressing a decrease in the binding force that binds the wires.

### Brief Description of Drawings

FIG. 1A shows a portion of a wire harness 100 according to Embodiment 1 of the present invention.
FIG. 1B shows a portion of the wire harness 100 according to Embodiment 1 of the present invention.
FIG. 1C shows a portion of the wire harness 100 according to Embodiment 1 of the present invention.
FIG. 1D shows a portion of the wire harness 100 according to Embodiment 1 of the present invention.
FIG. 2 is a perspective view showing an overall configuration of a wire harness binding apparatus according to Embodiment 1 of the present invention.
FIG. 3 is an enlarged perspective view of a binding device body.
FIG. 4 is a perspective view of the binding device body as viewed from a direction different from the direction of FIG. 3.
FIG. 5 shows the binding device body as viewed from a Y-axis direction.
FIG. 6A illustrates a movement of a wire rod hook section.
FIG. 6B illustrates a movement of the wire rod hook section.
FIG. 7 illustrates movements of the binding device body in a Z-axis direction.
FIG. 8 illustrates movements of the binding device body in an X-axis direction and the Y-axis direction.
FIG. 9A illustrates a first coupling step.
FIG. 9B illustrates the first coupling step.
FIG. 9C illustrates the first coupling step.
FIG. 9D illustrates the first coupling step.
FIG. 10 is a flowchart depicting a binding process in a wire harness binding method.

### Description of Embodiments

A wire harness according to an embodiment of the present invention is
a wire harness obtained by binding an object to be bound, which includes a plurality of wires, with a binding material constituted by a flexible wire rod,
wherein the binding material has a plurality of ring-shaped parts that are formed successively, and
the plurality of ring-shaped parts are arranged along a longitudinal direction of the object to be bound, and the object to be bound is bound by coupling the ring-shaped parts that are adjacent to each other (first configuration).

According to this configuration, the binding material has a plurality of ring-shaped parts that are formed successively. The plurality of ring-shaped parts are arranged along the longitudinal direction of the object to be bound. The object to be bound is bound by coupling the ring-shaped parts that are adjacent to each other.

Since the object to be bound is successively bound by the binding material constituted by a flexible wire rod, the work of binding the wires with the binding material can be automated and sped up.

In addition, adjacent ring-shaped parts are coupled to bind the object to be bound, making it less likely that the position of the binding material relative to the object to be bound will shift and suppressing a decrease in the binding force that binds the wires.

In the first configuration,
the plurality of ring-shaped parts may include a first ring-shaped part formed by curving a portion of the wire rod, and a second ring-shaped part formed by curving another portion of the wire rod, the first ring-shaped part and the second ring-shaped part being repeatedly formed, and
the first ring-shaped part and the second ring-shaped part that are adjacent to each other may be coupled (second configuration).

According to this configuration, the first ring-shaped part and the second ring-shaped part are repeatedly formed, and the first ring-shaped part and the second ring-shaped part that are adjacent to each other are coupled.

Repeatedly forming and coupling the first ring-shaped part and the second ring-shaped part makes it unlikely that the position of the binding material relative to the object to be bound will shift, and can suppress a decrease in the binding force that binds the wires.

In the second configuration,
the first ring-shaped part and the second ring-shaped part may be coupled by inserting the second ring-shaped part into the first ring-shaped part, and
the second ring-shaped part and the first ring-shaped part may be coupled by inserting the first ring-shaped part into the second ring-shaped part (third configuration).

According to this configuration, the successively formed first and second ring-shaped parts are coupled by alternately inserting the first and second ring-shaped parts into each other.

Alternately inserting the first ring-shaped part and the second ring-shaped part into each other to couple them makes it unlikely that the position of the binding material relative to the object to be bound will shift, and can suppress a decrease in the binding force that binds the wires.

In the third configuration,
a first binding part may be formed by the wire rod between the first ring-shaped part and the second ring-shaped part that are coupled by inserting the second ring-shaped part into the first binding part,
a second binding part may be formed by the wire rod between the second ring-shaped part and the first ring-shaped part that are coupled by inserting the first ring-shaped part into the second ring-shaped part, and
the object to be bound may be bound by the first and second binding parts (fourth configuration).

According to this configuration, the object to be bound is bound by the first and second binding parts between the successively formed first and second ring-shaped parts.

The coupling of the first and second ring-shaped parts makes it unlikely that the first and second binding parts will loosen. This can suppress a decrease in the binding force that binds the wires.

A wire harness binding apparatus according to an embodiment of the present invention is
a wire harness binding apparatus that forms a wire harness by binding an object to be bound that includes a plurality of wires, with a binding material constituted by a flexible wire rod, the apparatus including:
a wire rod supply unit for supplying the wire rod near the object to be bound; and
a ring shape forming unit for forming the ring-shaped part by curving a portion of the wire rod supplied from the wire rod supply unit,
wherein the ring shape forming unit forms the binding material by successively forming a plurality of ring-shaped parts in the wire rod supplied by the wire rod supply unit, arranging the plurality of ring-shaped parts along a longitudinal direction of the object to be bound, and coupling adjacent ring-shaped parts, of the plurality of ring-shaped parts, to each other along the longitudinal direction of the object to be bound (fifth configuration).

According to this configuration, the ring shape forming unit forms a binding material by successively forming a plurality of ring-shaped parts with the wire rod supplied by the wire rod supply unit, arranging the plurality of ring-shaped parts along the longitudinal direction of the object to be bound, and coupling adjacent ring-shaped parts along the longitudinal direction of the object to be bound.

Since the object to be bound is successively bound by the binding material constituted by a flexible wire rod, the work of binding the wires with the binding material can be automated and sped up.

In addition, adjacent ring-shaped parts are coupled to bind the object to be bound, making it less likely that the position of the binding material relative to the object to be bound will shift and suppressing a decrease in the binding force that binds the wires.

In the fifth configuration,
the ring shape forming unit may
form a first ring-shaped part by curving a portion of the wire rod, forms a second ring-shaped part by curving another portion of the wire rod, and repeatedly forms the first ring-shaped part and the second ring-shaped part, and
couple the plurality of ring-shaped parts to each other by coupling the first ring-shaped part and the second ring-shaped part that are adjacent to each other (sixth configuration).

According to this configuration, the plurality of ring-shaped parts are coupled to each other by coupling the first and second ring-shaped parts that are adjacent to each other.

Repeatedly forming and coupling the first ring-shaped part and the second ring-shaped part can speed up the work of binding the wires with the binding material.

In the sixth configuration,
the ring shape forming unit may
couple the first ring-shaped part and the second ring-shaped part by inserting the second ring-shaped part into the first ring-shaped part, and
couple the second ring-shaped part and the first ring-shaped part by inserting the first ring-shaped part into the second ring-shaped part (seventh configuration).

According to this configuration, the successively formed first and second ring-shaped parts are coupled by alternately inserting the first and second ring-shaped parts into each other.

Repeatedly forming the first and second ring-shaped parts and coupling them by alternately inserting them into each other can speed up the work of binding the wires with the binding material.

In the seventh configuration,
the ring-shaped part former may
form the second ring-shaped part coupled to the first ring-shaped part by pulling out a portion of the wire rod so as to insert the portion into the first ring-shaped part formed in the wire rod, and
form the first ring-shaped part coupled to the second ring-shaped part by pulling out a portion of the wire rod so as to insert the portion into the second ring-shaped part formed in the wire rod (eighth configuration).

According to this configuration, the ring-shaped part former forms the next ring-shaped part and simultaneously couples this ring-shaped part to the first or second ring-shaped part by pulling out a portion of the wire rod so as to insert this portion into the first or second ring-shaped part formed in the wire rod.

This allows a plurality of ring-shaped parts to be coupled to each other without making the movement of the ring-shaped part former complex.

In the eighth configuration,
a first direction may refer to a direction intersecting the longitudinal direction of the object to be bound,
a second direction may refer to a direction intersecting the longitudinal direction of the object to be bound and also intersecting the first direction,
the ring shape forming unit and the wire rod supply unit may
   be configured to move a predetermined distance in the longitudinal direction of the object to be bound each time the ring shape forming unit and the wire rod supply unit move back and forth once in the first direction,
   form the second ring-shaped part coupled to the first ring-shaped part on one side of the object to be bound in the first direction, and
   form the first ring-shaped part coupled to the second ring-shaped part on another side of the object to be bound in the first direction,
the ring shape forming unit may move back and forth in the first direction by passing one side of the object to be bound in the second direction, and
the wire rod supply unit may move back and forth in the first direction by passing another side of the object to be bound in the second direction (ninth configuration).

According to this configuration, the ring shape forming unit and the wire rod supply unit position arrange the plurality of ring-shaped parts so as to surround the periphery of the object to be bound and couple adjacent ring-shaped parts to each other while moving together relative to the object to be bound, thereby binding the object to be bound.

Thus, the object to be bound can be bound without making the movement of the ring shape forming unit and the wire rod supply unit complex.

In the ninth configuration,
the ring shape forming unit and the wire rod supply unit may be capable of changing a distance of movement in the longitudinal direction of the object to be bound each time the ring shape forming unit and the wire rod supply unit move back and forth once in the first direction (tenth configuration).

According to this configuration, the pitch at which the object to be bound is bound by the first and second ring-shaped parts can be changed by changing the distance that the ring shape forming unit and the wire rod supply unit move in the longitudinal direction of the object to be bound. Thus, the object to be bound can be bound appropriately.

A wire harness binding method according to an embodiment of the present invention is
a wire harness binding method for forming a wire harness by binding an object to be bound, which includes a plurality of wires, with a binding material constituted by a flexible wire, and
the method includes a coupling step of forming a plurality of ring-shaped parts along a longitudinal direction of the object to be bound while coupling the ring-shaped parts to each other (eleventh configuration).

According to this configuration, the object to be bound is successively bound by the binding material constituted by a flexible wire rod due to the coupling step of forming a plurality of ring-shaped parts along the longitudinal direction of the object to be bound while coupling the ring-shaped parts to each other. Thus, the work of binding the wires with the binding material can be automated and sped up.

### Embodiment 1

Hereinafter, a wire harness 100, a wire harness binding apparatus 200, and a wire harness binding method according to an embodiment of the present invention will be described in detail with reference to the drawings. In the figures, the same or corresponding parts are given the same reference signs and the description thereof is not repeated. For ease of understanding, the drawings referenced below show simplified or schematic configurations and omit some of the components. The dimensional ratios between components shown in the figures do not necessarily represent the actual dimensional ratios.

In the following description, a "+Z-axis direction" of the wire harness binding apparatus 200 is considered to be vertically upward, and a "-Z-axis direction" is considered to be vertically downward. One direction perpendicular to the +Z-axis direction is referred to as a "+X-axis direction", and one direction perpendicular to the +Z-axis direction and the +X-axis direction is referred to as a "+Y-axis direction". The directions opposite to the +X-axis direction and the +Y-axis direction are referred to as a "-X-axis direction" and a "-Y-axis direction", respectively. Note that the +Z-axis direction" of the wire harness binding apparatus 200 refers to the vertical direction for convenience of description. The X, Y, and Z-axis directions of the wire harness binding apparatus 200 may be any directions when in use and are not limited to the directions described in the embodiment.

### Wire harness

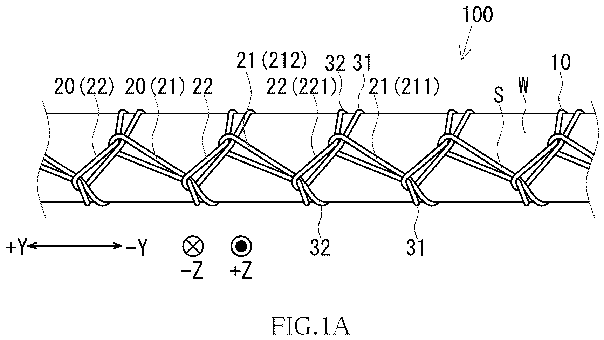

First, a wire harness is described. FIGS. 1A to 1D each show a portion of a wire harness 100 according to Embodiment 1 of the present invention. The wire harness 100 is formed by binding an object to be bound W, which includes a plurality of wires, with a binding material 10 that is constituted by a flexible wire rod S.

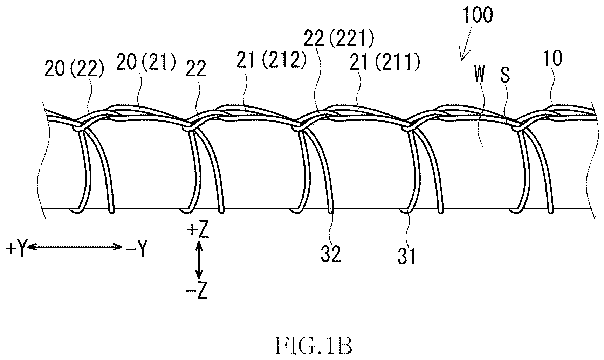

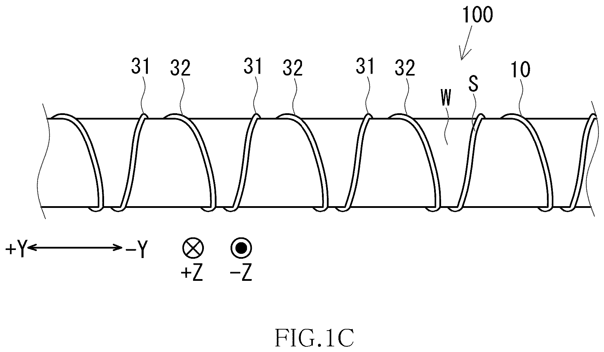

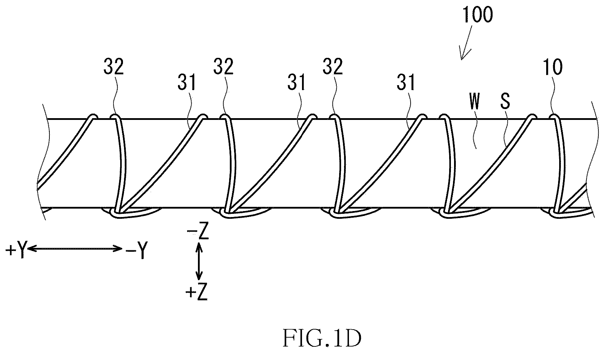

FIGS. 1A to 1D show the periphery of the wire harness 100 as viewed from directions that are different by 90 degrees. Assuming that a surface shown in FIG. 1A is an upper surface of the wire harness 100, FIG. 1B shows a side surface of the wire harness 100, FIG. 1C shows a bottom surface of the wire harness 100, and FIG. 1D shows a side surface of the wire harness 100 on the side opposite to the side shown in FIG. 1B. In FIGS. 1A to 1D, the Z-axis direction is indicated with the Y-axis direction indicating the longitudinal direction of the wire harness 100 to show the orientation of the wire harness 100.

The wires include electrical wires, optical fibers, or the like for power supply and signal communication, and may be a mixture of different types of wires. The type or the like of the wires included in the object to be bound W is not limited. In FIGS. 1A to 1D, the object to be bound W, which includes a plurality of wires, is shown simply as a cylindrical shape.

The wire rod S need only be flexible enough to be bent, and has sufficient strength (tensile strength) so that it can bind the object to be bound W. Examples of the wire rod S include, but are not limited to, a thread-like material, a string-like material, a band-like material, and a metal wire. The material is also not limited, and may be, for example, natural fiber such as cotton or hemp, chemical fiber such as nylon, or metal such as copper, aluminum, or stainless steel. The material may also be blended fiber, spun yarn, a filament, or the like, and may be a plurality of twisted or knitted fibers.

As shown in FIGS. 1A to 1D, the binding material 10 has a plurality of ring-shaped parts 20. The ring-shaped parts 20 of the present embodiment include a first ring-shaped part 21 and a second ring-shaped part 22. The first ring-shaped part 21 is a ring-shaped part 20 that extends from the lower right to the upper left in FIG. 1A and has a curved portion at the upper left of the ring-shaped part. The second ring-shaped part 22 is a ring-shaped part 20 that extends from the upper right to the lower left in FIG. 1A and has a curved portion at the lower left.

The first ring-shaped part 21 and the second ring-shaped part 22 are each formed by curving a portion of the wire rod S, and are formed repeatedly and successively. As shown in FIGS. 1A and 1B, the plurality of ring-shaped parts 20 (the first ring-shaped part 21 and the second ring-shaped part 22) are arranged on the periphery of the object to be bound W, along the longitudinal direction of the object to be bound W. In the following description, the first ring-shaped part 21 and the second ring-shaped part 22 may be referred to as the ring-shaped part(s) 20 without distinction.

The first ring-shaped part 21 and the second ring-shaped part 22 are formed with the flexible wire rod S. Thus, the shapes of the first ring-shaped part 21 and the second ring-shaped part 22 vary depending on the material of the wire rod S and the tension applied to the wire rod S, and are not limited to the shapes shown in FIGS. 1A to 1D. The first ring-shaped part 21 and the second ring-shaped part 22 may have the same size (length) or different sizes (lengths). The ratio between the size (length) of the first ring-shaped part 21 and the second ring-shaped part 22 and the thickness (diameter) of the object to be bound W is also not limited.

Adjacent ring-shaped parts 20 (the first ring-shaped part 21 and the second ring-shaped part 22) are coupled to each other. Specifically, the second ring-shaped part 22 adjacent to the first ring-shaped part 21 is inserted into this first ring-shaped part 21, and another first ring-shaped part 21 adjacent to the second ring-shaped part 22 is inserted into the second ring-shaped part 22. Such insertion is repeated, thereby successively coupling adjacent ring-shaped parts 20 (first ring-shaped parts 21 and second ring-shaped parts 22).

In the present embodiment, the first ring-shaped part 21 and the second ring-shaped part 22 being "coupled" to each other means that either one of the first ring-shaped part 21 and the second ring-shaped part 22 is inserted into the other, and when tension is applied to the wire rod S in this state, the shape and positional relationship of the first ring-shaped part 21 and the second ring-shaped part 22 inserted into each other are kept approximately constant.

A first binding part 31 is formed with the wire rod S between the first ring-shaped part 21 and the second ring-shaped part 22 that are coupled. Also, a second binding part 32 is formed with the wire rod S between the second ring-shaped part 22 and the first ring-shaped part 21 that are coupled.

Specifically, the first binding part 31 is a portion of the wire rod S that extends from the first ring-shaped part 21 (212) to reach the second ring-shaped part 22 (221) in an area where the second ring-shaped part 22 (221) is inserted into the first ring-shaped part 21 (212), as shown in FIGS. 1A and 1B. The second binding part 32 is a portion of the wire rod S that extends from the second ring-shaped part 22 (221) to reach the first ring-shaped part 21 (212) in an area where the first ring-shaped part 21 (212) is inserted into the second ring-shaped part 22 (221).

The first binding part 31 and the second binding part 32 are formed to surround the periphery of the object to be bound W by connecting adjacent ring-shaped parts 20 (the first ring-shaped part 21 and the second ring-shaped part 22) to each other. The tension applied to the wire rod S causes the first binding part 31 and the second binding part 32 to tighten the object to be bound W, thereby binding the object to be bound W with the binding material 10.

Further, since adjacent ring-shaped parts 20 (the first ring-shaped part 21 and the second ring-shaped part 22) are coupled to each other, the wire rod S is less likely to move due to friction or the like between portions of the wire rod S, and the tension applied to the wire rod S is less likely to decrease. This can suppress a decrease in the binding force that binds the object to be bound W.

### Wire harness binding apparatus

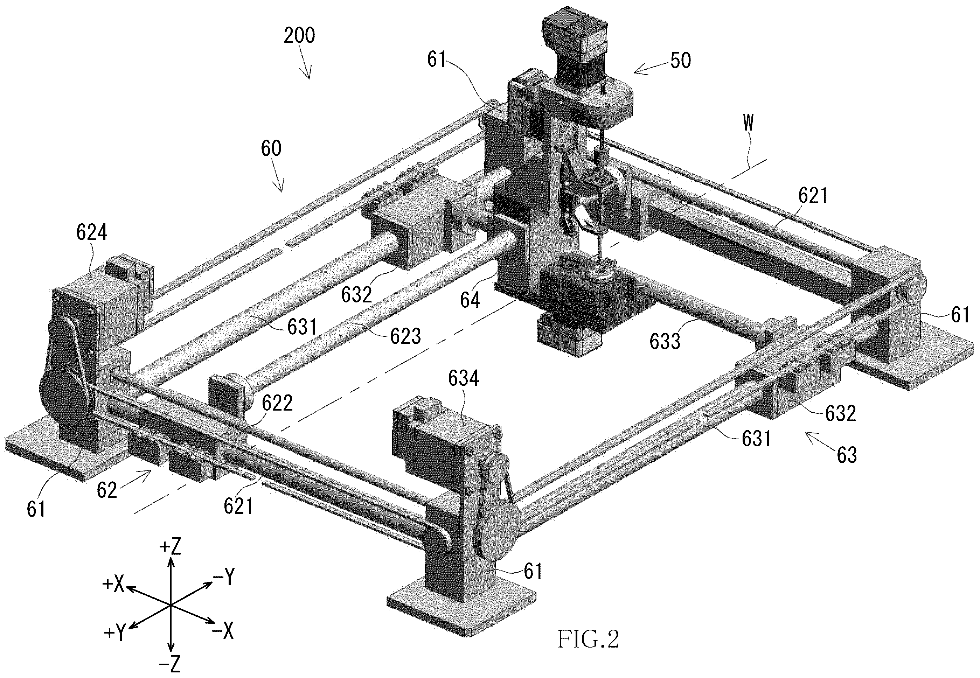

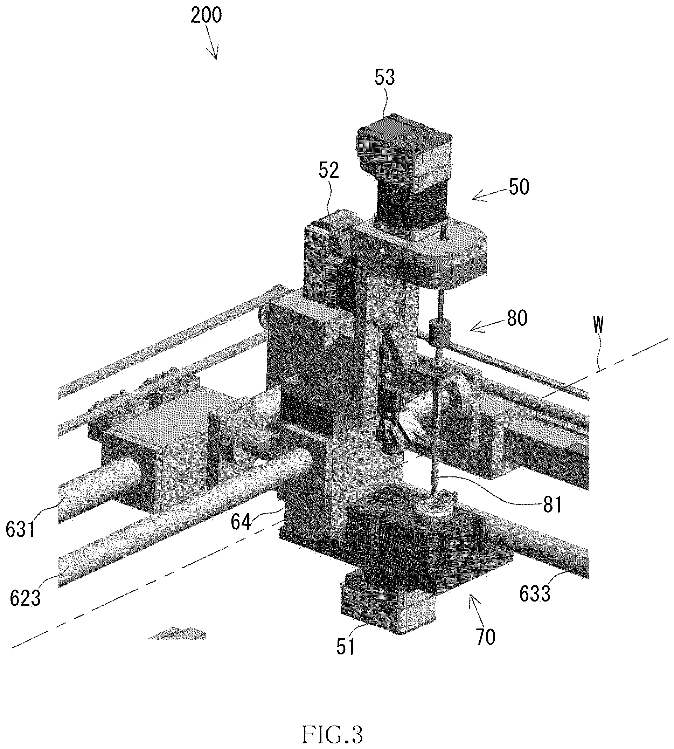

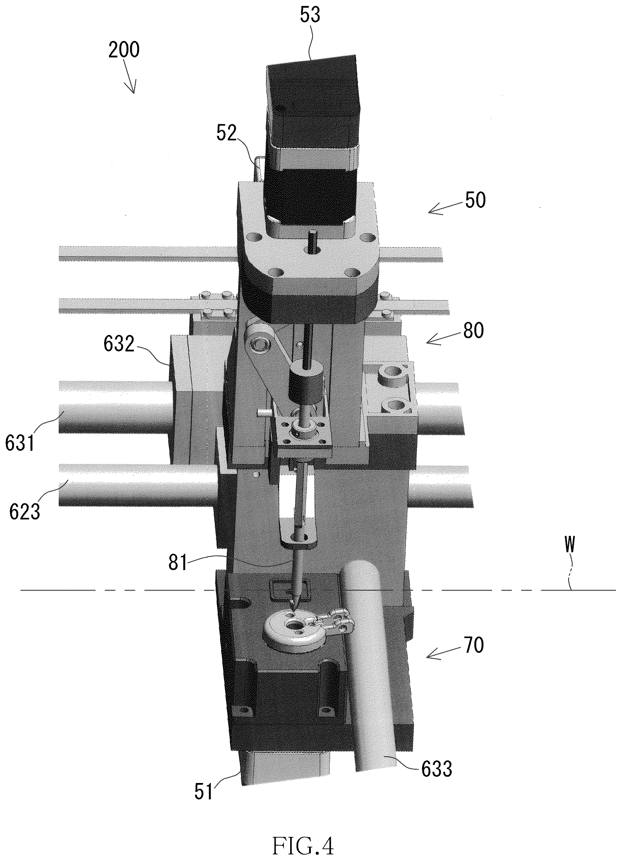

Next, the wire harness binding apparatus 200 is described. FIG. 2 is a perspective view showing an overall configuration of the wire harness binding apparatus 200 according to Embodiment 1 of the present invention. FIG. 3 is an enlarged perspective view of a binding device body 50. FIG. 4 is a perspective view of the binding device body 50 as viewed from a direction different from the direction of FIG. 3.

The wire harness binding apparatus 200 is an apparatus for forming a wire harness 100 having a binding material 10 that is constituted by a flexible wire rod S and with which a plurality of ring-shaped parts 20 (the first ring-shaped part 21 and the second ring-shaped part 22) are coupled to each other, as shown in FIGS. 1A to 1D, by performing a binding process of binding with the binding material 10 an object to be bound W that includes a plurality of wires.

The wire harness binding apparatus 200 performs the binding process in which a plurality of ring-shaped parts 20 (the first ring-shaped part 21 and the second ring-shaped part 22) are coupled to each other by repeatedly forming the first ring-shaped part 21 and the second ring-shaped part 22 and repeatedly and successively performing a coupling step of coupling the first ring-shaped part and the second ring-shaped part that are adjacent to each other.

More specifically, the coupling step includes two steps, namely a first coupling step and a second coupling step. The first coupling step is a step of forming the second ring-shaped part 22 coupled to the first ring-shaped part 21 by pulling out a portion of the wire rod S so as to insert this portion into the first ring-shaped part 21, which is formed by bending another portion of the wire rod S. The second coupling step is a step of forming the first ring-shaped part 21 coupled to the second ring-shaped part 22 by pulling out a portion of the wire rod S so as to insert this portion into the second ring-shaped part 22, which is formed by bending another portion of the wire rod S. The wire harness binding apparatus 200 performs the binding process in which a plurality of ring-shaped parts 20 (the first ring-shaped part 21 and the second ring-shaped part 22) are coupled to each other by alternately and successively performing the first coupling step and the second coupling step.

As shown in FIG. 2, the wire harness binding apparatus 200 according to the present embodiment performs the binding process of binding the object to be bound W placed along the Y-axis direction with the binding material 10. Accordingly, the "longitudinal direction of the object to be bound" in the present invention corresponds to the Y-axis direction. A "first direction that is a direction intersecting the longitudinal direction of the object to be bound" in the present invention corresponds to the X-axis direction.

The wire harness binding apparatus 200 includes a binding device body 50 and a guide device 60. The binding device body 50 performs the binding process of forming the binding material 10 with the wire rod S and binding the object to be bound W while moving in the X-axis direction and the Y-axis direction relative to the object to be bound W that is placed along the Y-axis direction. The guide device 60 moves the binding device body 50 in the X-axis direction and the Y-axis direction. The movement of the wire harness binding apparatus 200 that includes the binding device body 50 and the guide device 60 is controlled by a control unit, which is not shown in the figures.

### Guide device

As shown in FIG. 2, the guide device 60 has support sections 61, an X-axis guide section 62, a Y-axis guide section 63, and a moving section 64.

The support sections 61 are sections supporting the X-axis guide section 62 and the Y-axis guide section 63. Four support sections 61 are spaced apart from each other in the X-axis direction and the Y-axis direction. The support sections 61 are fixed to device bases or the like, which are not shown in the figures.

The X-axis guide section 62 controls the position in the X-axis direction of the binding device body 50 that is fixed to the moving section 64, by controlling the position in the X-axis direction of the moving section 64. The X-axis guide section 62 has X-axis fixed guides 621, X-axis moving portions 622, an X-axis moving guide 623, and an X-axis driver 624.

Two X-axis fixed guides 621 are spaced apart from each other in the Y-axis direction, and are supported by the support sections 61 so as to be parallel with the X-axis direction. Two X-axis moving portions 622 are provided and movably supported relative to the respective X-axis fixed guides 621. The X-axis moving guide 623 is provided so as to join the two X-axis moving portions 622, and can move in the X-axis direction together with the X-axis moving portions 622 while being kept parallel with the Y-axis direction. The X-axis moving guide 623 supports the moving section 64 so as to be movable in the Y-axis direction.

The X-axis driver 624 moves the X-axis moving portion 622 in the X-axis direction. The X-axis driver 624 of the present embodiment has a belt, a pulley, a stepping motor, and the like. The belt is fixed to the X-axis moving portion 622, and the position in the X-axis direction of the X-axis moving portion 622 is controlled by accurately moving the belt by a predetermined amount at a time using the stepping motor. This makes it possible to control the positions in the X-axis direction of the moving section 64 supported by the X-axis moving guide 623 and the binding device body 50 fixed to the moving section 64.

The Y-axis guide section 63 controls the position in the Y-axis direction of the binding device body 50 that is fixed to the moving section 64, by controlling the position in the Y-axis direction of the moving section 64. The Y-axis guide section 63 has substantially the same configuration as the X-axis guide section 62. The Y-axis guide section 63 has Y-axis fixed guides 631, Y-axis moving portions 632, a Y-axis moving guide 633, and a Y-axis driver 634.

Two Y-axis fixed guides 631 are spaced apart from each other in the X-axis direction, and are supported by the support sections 61 so as to be parallel with the Y-axis direction. Two Y-axis moving portions 632 are provided and movably supported relative to the respective Y-axis fixed guides 631. The Y-axis moving guide 633 is provided so as to join the two Y-axis moving portions 632, and can move in the Y-axis direction together with the Y-axis moving portions 632 while being kept parallel with the X-axis direction. The Y-axis moving guide 633 supports the moving section 64 so as to be movable in the X-axis direction.

The Y-axis driver 634 moves the Y-axis moving portion 632 in the Y-axis direction. The Y-axis driver 634 of the present embodiment has a belt, a pulley, a stepping motor, and the like. The belt is fixed to the Y-axis moving portion 632, and the position in the Y-axis direction of the Y-axis moving portion 632 is controlled by accurately moving the belt by a predetermined amount at a time using the stepping motor. This makes it possible to control the positions in the Y-axis direction of the moving section 64 supported by the Y-axis moving guide 633 and the binding device body 50 fixed to the moving section 64.

The positions in the X-axis direction and the Y-axis direction of the binding device body 50, which is fixed to the moving section 64, can be controlled by controlling the positions in the X-axis direction and the Y-axis direction of the moving section 64 using the guide device 60.

### Binding device body

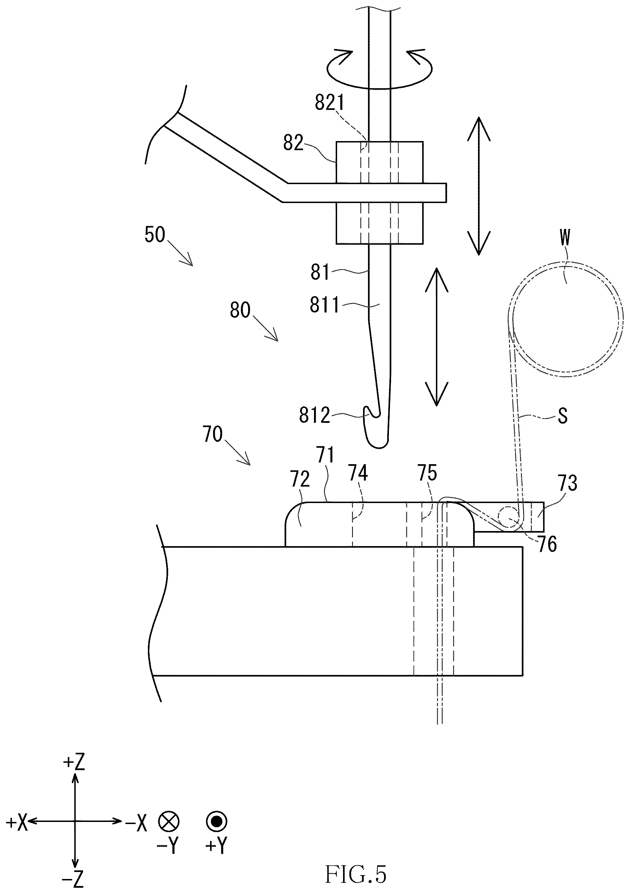

As shown in FIGS. 3 and 4, the binding device body 50 has a wire rod supply unit 70 and a ring shape forming unit 80. The wire rod supply unit 70 supplies the wire rod S to the ring shape forming unit 80 near the object to be bound W (see FIG. 5). The ring shape forming unit 80 forms a plurality of ring-shaped parts 20 (the first ring-shaped part 21 and the second ring-shaped part 22) using the wire rod S supplied from the wire rod supply unit 70.

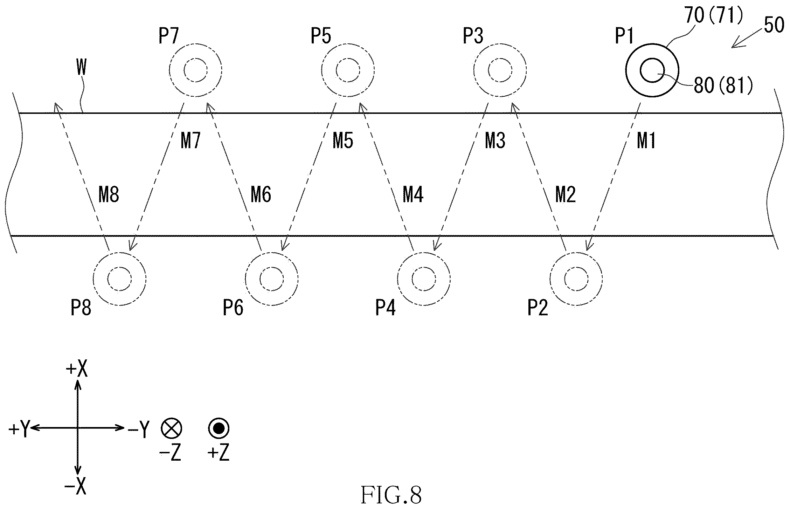

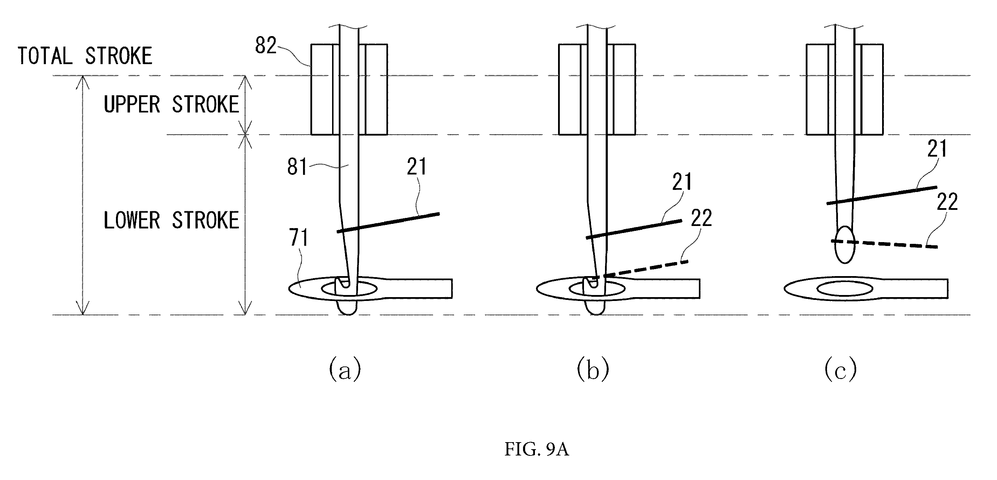

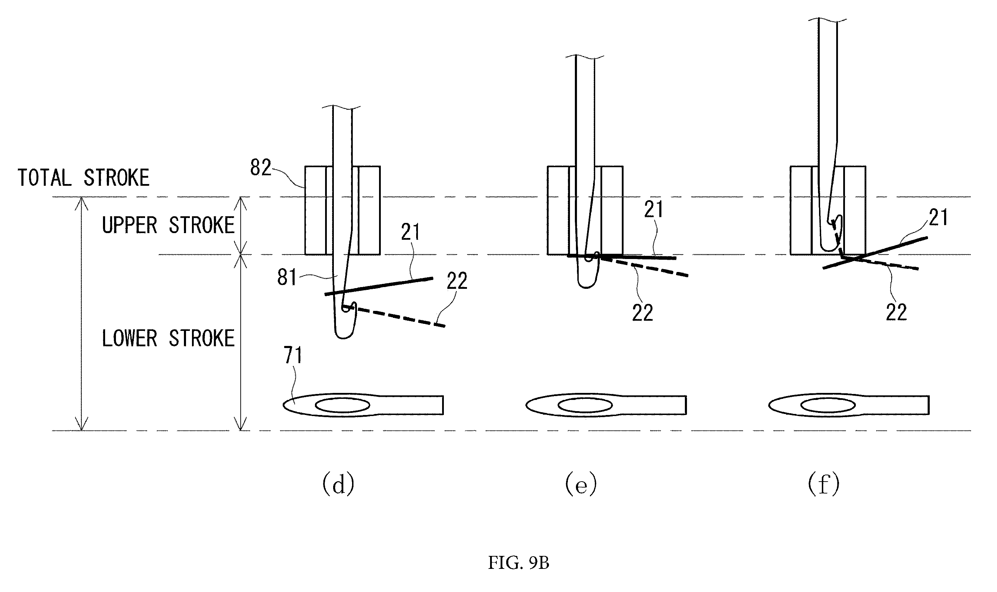

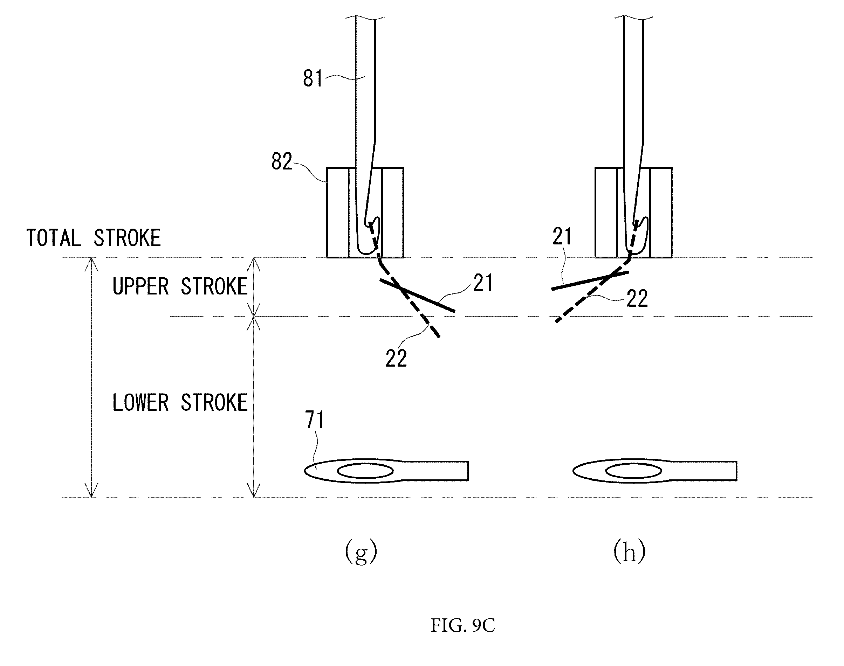

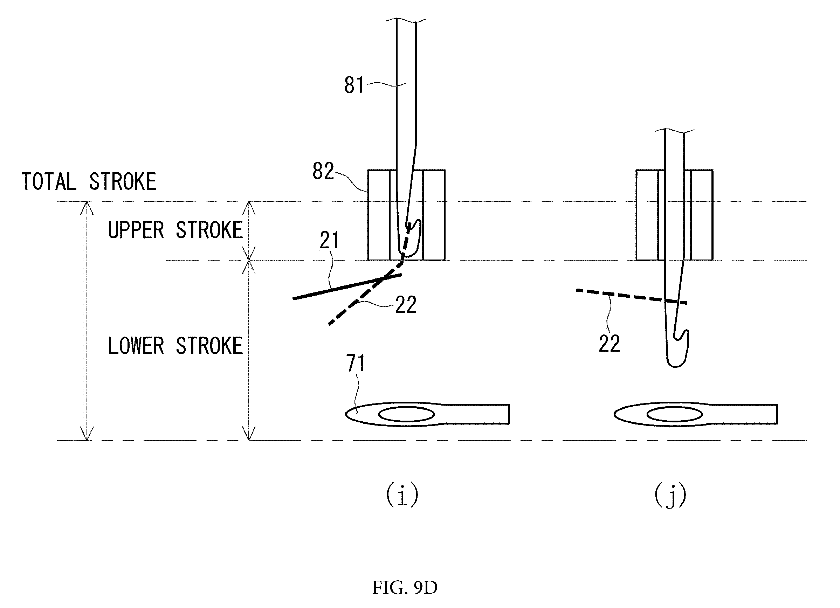

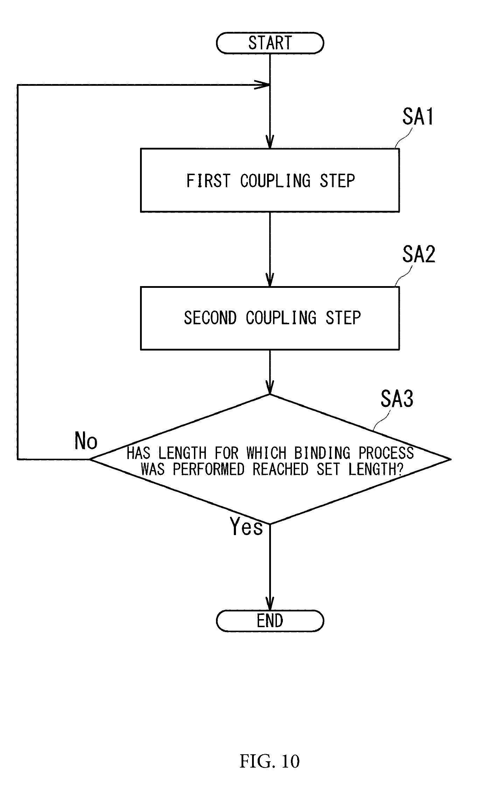

The wire rod supply unit 70 and the ring shape forming unit 80 perform, on the object to be bound W placed along the Y-axis direction, the binding process of forming the binding material 10 with the wire rod S and binding the object to be bound W while being moved by the guide device 60 in the X-axis direction and the Y-axis direction relative to the object to be bound W placed along the Y-axis direction (see FIG. 8).

The binding device body 50 includes a wire rod supply driver 51, a first ring shape forming driver 52, and a second ring shape forming driver 53. The wire rod supply driver 51 drives the wire rod supply unit 70. The first ring shape forming driver 52 and the second ring shape forming driver 53 drive the ring shape forming unit 80.

The ring shape forming unit 80 can move in the Z-axis direction, and the first ring shape forming driver 52 drives the ring shape forming unit 80 in the Z-axis direction. The first ring shape forming driver 52 of the present embodiment has a toggle mechanism, a stepping motor, and the like. One link of the toggle mechanism is fixed to the stepping motor, and the other link of the toggle mechanism is fixed to the ring shape forming unit 80. The position in the Z-axis direction of the ring shape forming unit 80 is controlled by rotating the links of the toggle mechanism by a predetermined amount using the stepping motor.

An operation section 81 (see FIG. 5) that constitutes the ring shape forming unit 80 is rotatable about the Z axis, and the second ring shape forming driver 53 rotates the operation section 81 about the Z axis. The second ring shape forming driver 53 has a stepping motor. The orientation of the operation section 81 is controlled by rotating the operation section 81 by a predetermined amount using the stepping motor.

### Wire rod supply section

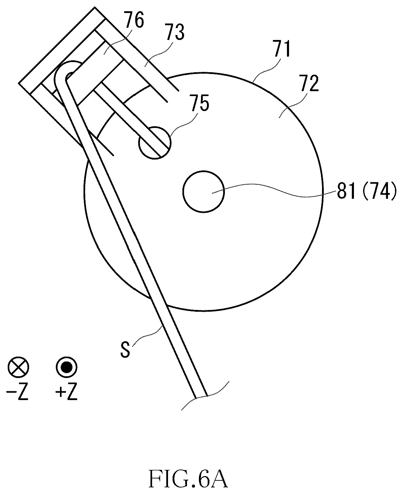

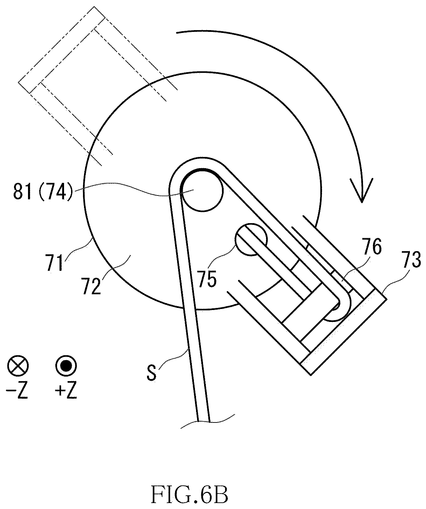

FIG. 5 shows the binding device body 50 as viewed from the Y-axis direction. As shown in FIG. 5, the wire rod supply unit 70 supplies the wire rod S to the ring shape forming unit 80 near the object to be bound W. The wire rod supply unit 70 has a retainer (not shown), a tension adjuster (not shown), and a wire rod hooking portion 71 (see FIGS. 6A and 6B).

The retainer is, for example, a reel on which the wire rod S is wound, and retains and supplies the wire rod S. The retainer is located, for example, below the binding device body 50.

The tension adjuster is a mechanism that applies an appropriate tension to the wire rod S. The tension adjuster is located between the retainer and the wire rod hooking portion 71. The tension adjuster can be, for example, a mechanism that is provided with a weight or the like and utilizes gravity, or a mechanism that utilizes elastic force of an elastic body such as a spring.

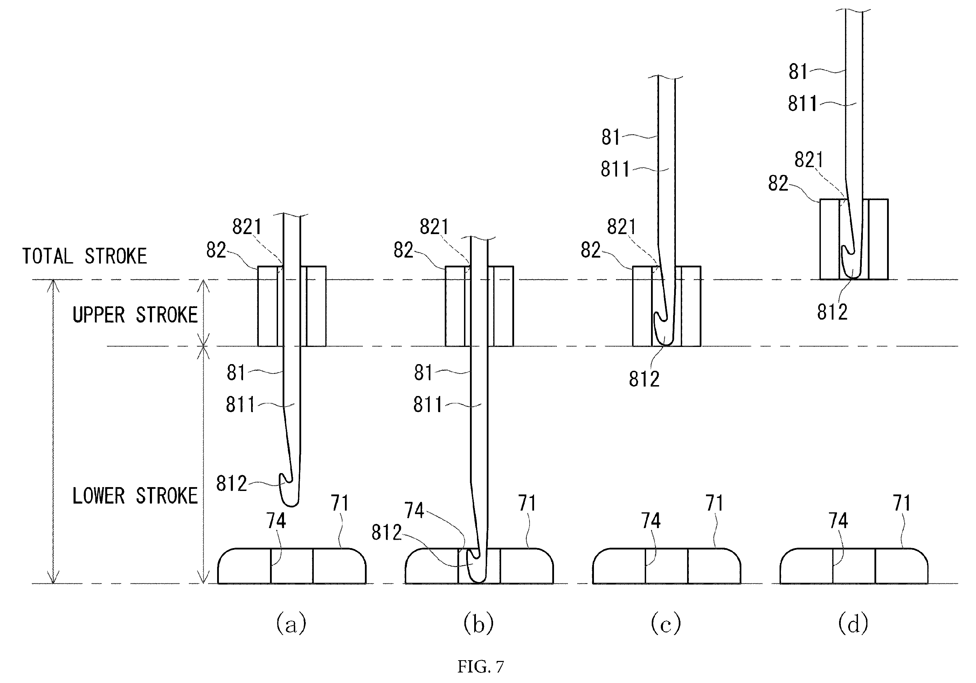

The wire rod hooking portion 71 moves to hook the wire rod S onto the operation section 81 of the ring shape forming unit 80. The wire rod hooking portion 71 has a hooking portion body 72 and an arm 73 (see FIGS. 6A and 6B). The hooking portion body 72 is a substantially disk-shaped member. The hooking portion body 72 has an insertion hole 74 and a supply opening 75. A leading end portion (locking portion 812) of the operation section 81 of the ring shape forming unit 80 can be inserted into the insertion hole 74 (see FIG. 7(b)). The wire rod S supplied from the retainer is inserted into the supply opening 75.

The arm 73 protrudes sideward relative to the hooking portion body 72. A roller 76 is provided inside the arm 73. The wire rod S inserted into the supply opening 75 is supplied toward the object to be bound W via the roller 76.

The wire rod supply driver 51 is connected to the hooking portion body 72 (see FIG. 3). The wire rod supply driver 51 rotates the wire rod hooking portion 71 about the Z axis (see FIGS. 6A and 6B). The movement of the wire rod hooking portion 71 will be described in detail later.

### Ring shape forming unit

The ring shape forming unit 80 forms a plurality of ring-shaped parts 20 (the first ring-shaped part 21 and the second ring-shaped part 22) with the wire rod S supplied from the wire rod supply unit 70. The ring shape forming unit 80 has an operation section 81 and a holding section 82.

The operation section 81 is a member that temporarily locks or holds the wire rod S and performs an operation for the wire rod S. Specifically, the operation section 81 performs an operation to form a ring-shaped part 20 by curving a portion of the wire rod S. The operation section 81 also performs an operation to form a ring-shaped part 20 in the wire rod S and then form the next ring-shaped part 20 while inserting this ring-shaped part 20 into the previously formed ring-shaped part 20 (see FIGS. 9A to 9D). The operation section 81 of the present embodiment is a hook-shaped member that has the locking portion 812 at the leading end of a shaft portion 811, but the shape and mechanism of the operation section 81 are not limited.

The holding section 82 is a member that performs an operation for the wire rod S together with the operation section 81. The holding section 82 of the present embodiment is a cylindrical member, and has an insertion portion 821 at the center through which the operation section 81 is inserted. The operation section 81 can move in the Z-axis direction relative to the holding section 82. The operation section 81 and the holding section 82 can also move in the Z-axis direction at the same time. Further, the operation section 81 can rotate about the Z axis relative to the holding section 82.

### Movement of wire rod supply section

FIGS. 6A and 6B illustrate the movement of the wire rod hooking portion 71. FIG. 6A shows an example of the orientation of the wire rod hooking portion 71, which is stopped with the arm 73 directed to the upper left side in the figure. Here, the locking portion 812 of the operation section 81 is inserted in the insertion hole 74 (see FIG. 7(b)). The end side of the wire rod S supplied from the supply opening 75 extends downward in the figure and has not been hooked onto the operation section 81 inserted in the insertion hole 74.

FIG. 6B shows the orientation of the hooking portion body 72 after rotating rightward in the figure from the orientation in FIG. 6A. The hooking portion body 72 is stopped after rotating until the arm 73 is directed to the right lower side in the figure. In this state, the wire rod S supplied from the supply opening 75 is curved and hooked around the operation section 81 (see FIG. 9A(b)). By pulling up the operation section 81 from the insertion hole 74 in the state shown in FIG. 6B, the curved portion of the wire rod S is locked to the locking portion 812 of the operation section 81. As a result of the wire rod S being locked to the locking portion 812 of the operation section 81, the operation section 81 can perform an operation for the wire rod S, e.g., to pull up the wire rod S (FIG. 9A(c)).

### Movement of binding device body in Z-axis direction

FIG. 7 illustrates movements of the binding device body 50 in the Z-axis direction. As shown in FIG. 7(a) to 7(d), the wire rod supply unit 70 (the wire rod hooking portion 71) is fixed to the binding device body 50, and the position in the Z-axis direction of the wire rod supply unit 70 does not change (see FIGS. 4 and 5). Meanwhile, the ring shape forming unit 80 (the operation section 81 and the holding section 82) can move in the Z-axis direction. Thus, the relative positional relationship in the Z-axis direction between the wire rod supply unit 70 (the wire rod hooking portion 71) and the ring shape forming unit 80 (the operation section 81 and the holding section 82) can be changed by moving the ring shape forming unit 80 (the operation section 81 and the holding section 82) in the Z-axis direction. Movements shown in FIGS. 7(a) to 7(d) are described below.

In the movement shown in FIG. 7(a), the locking portion 812 of the operation section 81 is separated from the insertion hole 74 of the wire rod hooking portion 71 and located in the +Z-axis direction relative to (i.e., above) the insertion hole 74. The locking portion 812 of the operation section 81 is also separated from the insertion portion 821 of the holding section 82 and located below the insertion portion 821.

In the movement shown in FIG. 7(b), the operation section 81 is lowered in the -Z-axis direction from the position shown in FIG. 7(a). The locking portion 812 of the operation section 81 is inserted in the insertion hole 74 of the wire rod hooking portion 71. The position in the Z-axis direction of the holding section 82 has not changed from the position in FIG. 7(a).

In the movement shown in FIG. 7(c), the operation section 81 is raised in the +Z-axis direction from the position shown in FIGS. 7(a) and 7(b). The locking portion 812 of the operation section 81 is inserted in the insertion portion 821 of the holding section 82. The position in the Z-axis direction of the holding section 82 has not changed from the position in FIGS. 7(a) and 7(b).

In the movement shown in FIG. 7(d), both the operation section 81 and the holding section 82 are raised in the +Z-axis direction from their positions in FIG. 7(c). The locking portion 812 of the operation section 81 is raised together with the holding section 82 while being inserted in the insertion portion 821 of the holding section 82.

### Movement of binding device body in X-axis direction and Y-axis direction

FIG. 8 illustrates movements of the binding device body 50 in the X-axis direction and the Y-axis direction. As shown in FIG. 8, the wire rod supply unit 70 (the wire rod hooking portion 71) and the ring shape forming unit 80 (the operation section 81 and the holding section 82) that constitute the binding device body 50 move in the X-axis direction and the Y-axis direction relative to the object to be bound W that is set in the wire harness binding apparatus 200, while maintaining their relative positions in the X-axis direction and the Y-axis direction. The binding device body 50 moves in the X-axis direction and the Y-axis direction due to the guide device 60 performing position control as mentioned above.

For example, the binding device body 50 moves in order from position P1 to P2, ... P7, and P8, as shown in FIG. 8. Specifically, the binding device body 50 moves in the X-axis direction so that the wire rod supply unit 70 and the ring shape forming unit 80 are alternately positioned on the -X side and the +X side relative to the object to be bound W, while at the same time moving in the +Y-axis direction a predetermined distance at a time.

Further, when the wire rod supply unit 70 and the ring shape forming unit 80 move to the +X side and the -X side relative to the object to be bound W, the wire rod supply unit 70 passes the -Z side of the object to be bound W (i.e., below the object to be bound W). The ring shape forming unit 80 passes the +Z side relative to the object to be bound W (i.e., above the object to be bound W).

Although the binding device body 50 in FIG. 8 moves a predetermined distance in the +Y-axis direction each time the binding device body 50 moves back and forth in the X-axis direction, the distance of the movement in the +Y-axis direction may vary as required.

### Movements in binding process of wire harness binding apparatus

The wire harness binding apparatus 200 performs, as mentioned above, the binding process of coupling a plurality of ring-shaped parts 20 (the first ring-shaped part 21 and the second ring-shaped part 22) to each other by repeatedly forming the first ring-shaped part 21 and the second ring-shaped part 22 and repeatedly and successively performing the coupling step (the first coupling step and the second coupling step) of coupling the first ring-shaped part and the second ring-shaped part that are adjacent to each other.

In the present embodiment, the first coupling step is performed in a state where the binding device body 50 (the wire rod supply unit 70 and the ring shape forming unit 80) is located on the +X side of the object to be bound W and moves from the +X side to the -X side, as shown in FIG. 8. Further, the second coupling step is performed in a state where the binding device body 50 (the wire rod supply unit 70 and the ring shape forming unit 80) is located on the -X side of the object to be bound W and moves from the -X side to the +X side.

That is, the first coupling step is performed, for example, in a state where the binding device body 50 (the wire rod supply unit 70 and the ring shape forming unit 80) is located at P1 and on a path M1 to move from P1 to P2. Similarly, the first coupling step is performed in a state where the binding device body 50 is located at P3 and on a path M3, at P5 and on a path M5, and at P7 and on a path M7.

The first coupling step is a step of coupling the second ring-shaped part 22 to the first ring-shaped part 21. Specifically, the first coupling step is a step of forming the second ring-shaped part 22 coupled to the first ring-shaped part 21 by pulling out a portion of the wire rod S so as to insert this portion into the first ring-shaped part 21, which is formed by bending another portion of the wire rod S.

The second coupling step is performed, for example, in a state where the binding device body 50 (the wire rod supply unit 70 and the ring shape forming unit 80) is located at P2 and on a path M2 to move from P2 to P3. Similarly, the second coupling step is performed in a state where the binding device body 50 is located at P4 and on a path M4, at P6 and on a path M6, and at P8 and on a path M8.

The second coupling step is a step of coupling the first ring-shaped part 21 to the second ring-shaped part 22. Specifically, the second coupling step is a step of forming the first ring-shaped part 21 coupled to the second ring-shaped part 22 by pulling out a portion of the wire rod S so as to insert this portion into the second ring-shaped part 22, which is formed by bending another portion of the wire rod S.

### First coupling step

Next, the movements of the binding device body 50 (the wire rod supply unit 70 and the ring shape forming unit 80) in the first coupling step are described in detail. FIGS. 9A(a) to 9D(j) illustrate the first coupling step. FIGS. 9A(a) to 9D(j) schematically show the wire rod hooking portion 71 of the wire rod supply unit 70, the operation section 81 and the holding section 82 of the ring shape forming unit 80, and the first ring-shaped part 21 and the second ring-shaped part 22 that are formed with the wire rod S, as viewed from the +Y-axis direction.

The first coupling step shown in FIGS. 9A(a) to 9D(j) will be described assuming that it is performed with the binding device body 50 (the wire rod supply unit 70 and the ring shape forming unit 80) located at P1 and on the path M1 to move from P1 to P2 in FIG. 8.

Note that the first coupling step and the second coupling step are in a relationship where the first ring-shaped part 21 and the second ring-shaped part 22 are interchanged. Therefore, in the second coupling step, the first ring-shaped part 21 and the second ring-shaped part 22 are interchanged from those shown in FIGS. 9A(a) to 9D(j).

In FIG. 9A(a), the operation section 81 has lowered in the -Z-axis direction from the position P1 in FIG. 8, and the locking portion 812 of the operation section 81 is inserted in the insertion hole 74 of the wire rod hooking portion 71. The wire rod S is curved by being hooked around the shaft portion 811 of the operation section 81. The curved portion hooked around the shaft portion 811 forms the first ring-shaped part 21. The curved portion of the wire rod S hooked around the shaft portion 811 in FIG. 9A(a) is a portion that is locked to and curved by the locking portion 812 of the operation section 81 in the previous step (not shown). The operation section 81 is lowered from the state where the wire rod S is locked to the locking portion 812 of the operation section 81, thereby causing the shaft portion 811 of the operation section 81 to be inserted into the curved portion of the wire rod S (i.e., the wire rod S is hooked around the shaft portion 811).

FIG. 9A(b) shows a state where the wire rod hooking portion 71 has rotated to hook the wire rod S around the operation section 81 (see FIG. 6B). The curved portion hooked around the operation section 81 by the wire rod hooking portion 71 forms the second ring-shaped part 22.

FIG. 9A(c) shows a state where the operation section 81 has rotated approximately 90 degrees about the Z axis from the state shown in FIG. 9A (b) while being pulled up in the +Z-axis direction from the insertion hole 74. The portion forming the second ring-shaped part 22 is in a state of being locked to the locking portion 812 of the operation section 81. The portion that is hooked around the shaft portion 811 of the operation section 81 to form the first ring-shaped part 21 has also been pulled up together with the operation section 81 due to friction.

FIG. 9B(d) shows a state where the operation section 81 has rotated approximately 180 degrees about the Z axis from the state shown in FIG. 9A(b) while being pulled up further in the +Z-axis direction. The portion forming the second ring-shaped part 22 is locked to the locking portion 812 of the operation section 81. The portion that is hooked around the shaft portion 811 of the operation section 81 to form the first ring-shaped part 21 is also pulled up together with the operation section 81.

FIG. 9B(e) shows a state where the operation section 81 is pulled up further in the +Z-axis direction, so that the locking portion 812 of the operation section 81 is being inserted into the insertion portion 821 of the holding section 82. In this state, the portion that is hooked around the shaft portion 811 of the operation section 81 to form the first ring-shaped part 21 cannot be raised due to contact with a lower edge of the holding section 82, and the operation section 81 and the portion that is locked to the locking portion 812 of the operation section 81 to form the second ring-shaped part 22 are pulled up.

FIG. 9B(f) shows a state where the operation section 81 is pulled up further in the +Z-axis direction, thereby causing the locking portion 812 of the operation section 81 to be inserted in the insertion portion 821 of the holding section 82 (see

FIG. 7(c)). In this state, the portion that is hooked around the shaft portion 811 of the operation section 81 to form the first ring-shaped part 21 is pushed out by the lower edge of the holding section 82. Meanwhile, the portion that is locked to the locking portion 812 of the operation section 81 to form the second ring-shaped part 22 is inserted in the insertion portion 821 of the holding section 82. That is, the second ring-shaped part 22 coupled to the first ring-shaped part 21 is formed by pulling a portion of the wire rod S so as to insert this portion into the first ring-shaped part 21.

In FIG. 9C(g), both the operation section 81 and the holding section 82 are raised in the +Z-axis direction. The locking portion 812 of the operation section 81 is raised together with the holding section 82 while being inserted in the insertion portion 821 of the holding section 82 (see FIG. 7(d)). As a result of this movement, the second ring-shaped part 22 is greatly pulled out from the first ring-shaped part 21. Further, the operation section 81 and the holding section 82 are prevented from interfering with the object to be bound W while the wire rod supply unit 70 and the ring shape forming unit 80 move from P1 to P2 in FIG. 8 relative to the object to be bound W.

In FIG. 9C(h), both the operation section 81 and the holding section 82 move from P1 to P2 in FIG. 8. The locking portion 812 of the operation section 81 is raised together with the holding section 82 while being inserted in the insertion portion 821 of the holding section 82 (see FIG. 7(d)). As a result of this movement, the second ring-shaped part 22 is greatly pulled out from the first ring-shaped part 21. Further, the operation section 81 and the holding section 82 are raised in the +Z-axis direction so as not to interfere with the object to be bound W while the wire rod supply unit 70 and the ring shape forming unit 80 move from the position P1 to the position P2 relative to the object to be bound W.

In FIG. 9D(i), both the operation section 81 and the holding section 82 move down in the -Z-axis direction at the position P2 in FIG. 8.

In FIG. 9D(j), the operation section 81 moves down in the -Z-axis direction relative to the holding section 82. The downward movement of the operation section 81 moves the second ring-shaped part 22, which has been locked to the locking portion 812, to a state of being hooked around the shaft portion 811.

From the state in FIG. 9D(j), the coupling step switches from the first coupling step to the second coupling step at the position P2 in FIG. 8. The first coupling step shown in FIGS. 9A(a) to 9D(j) and the second coupling step in which the first ring-shaped part 21 and the second ring-shaped part 22 are interchanged in FIGS. 9A(a) to 9D(j) are repeatedly and successively performed while the binding device body 50 moves in the X-axis direction and the Y-axis direction relative to the object to be bound W as shown in FIG. 8. Thus, the binding process of alternately coupling the plurality of ring-shaped parts 20 (the first ring-shaped part 21 and the second ring-shaped part 22) to each other is performed.

### Wire harness binding method

FIG. 10 is a flowchart depicting the binding process in the wire harness binding method. In the wire harness binding method according to the present embodiment, the coupling step is repeatedly and successively performed in which the first ring-shaped part 21 and the second ring-shaped part 22 are repeatedly formed and the first ring-shaped part and the second ring-shaped part that are adjacent to each other are coupled.

The coupling step includes a first coupling step and a second coupling step.

The first coupling step is a step of forming the second ring-shaped part 22 coupled to the first ring-shaped part 21 by pulling out a portion of the wire rod S so as to insert this portion into the first ring-shaped part 21, which is formed by bending another portion of the wire rod S. The second coupling step is a step of forming the first ring-shaped part 21 coupled to the second ring-shaped part 22 by pulling out a portion of the wire rod S so as to insert this portion into the second ring-shaped part 22, which is formed by bending another portion of the wire rod S.

After the binding process starts, the first coupling step (SA1) and the second coupling step (SA2) are successively performed as shown in FIG. 10. If the length for which the binding process was performed has reached a set length (Yes in SA3), the binding process ends. If the length for which the binding process was performed has not reached the set length (No in SA3), the binding process continues (SA1).

With the wire harness 100 according to the above-described present embodiment, the binding material 10 has a plurality of ring-shaped parts 20 (the first ring-shaped part 21 and the second ring-shaped part 22) that are formed successively, and the plurality of ring-shaped parts 20 are arranged along the longitudinal direction of the object to be bound W, which is bound by coupling adjacent ring-shaped parts 20 to each other.

Since the object to be bound W is successively bound by the binding material 10 constituted by a flexible wire rod S, the work of binding the wires with the binding material 10 can be automated and sped up.

In addition, adjacent ring-shaped parts 20 are coupled to each other to bind the object to be bound W, making it less likely that the position of the binding material 10 will shift relative to the object to be bound W and suppressing a decrease in the binding force that binds the wires.

With the wire harness binding apparatus 200 and the wire harness binding method according to the present embodiment, the plurality of ring-shaped parts 20 are coupled to each other by coupling the first ring-shaped part 21 and second ring-shaped part 22 that are adjacent to each other.

Since the first ring-shaped part 21 and the second ring-shaped part 22 are repeatedly formed and coupled to each other, the work of binding the wires with the binding material 10 can be sped up.

### Modifications

Although the embodiment of the present invention has been described above, the above embodiment is merely an example for implementing the present invention. Therefore, the present invention is not limited to the above embodiment, and the above embodiment can be modified and implemented as appropriate without deviating from the spirit thereof.

### Industrial Applicability

The present invention is applicable to a wire harness binding apparatus that forms a wire harness by binding an object to be bound, which includes wires, with a binding material.

### List of Reference Numerals

- 100: Wire harness
- 200: Wire harness binding apparatus
- 10: Binding material
- 20: Ring-shaped part
- 21: First ring-shaped part
- 22: Second ring-shaped part
- 50: Binding device body
- 60: Guide device
- 70: Wire rod supply unit
- 80: Ring shape forming unit
- W: Object to be bound
- S: Wire rod

## Claims

1. A wire harness binding apparatus that forms a wire harness by binding an object to be bound that includes a plurality of wires, with a binding material constituted by a flexible wire rod, the apparatus comprising:
a wire rod supply unit for supplying the wire rod near the object to be bound; and
a ring shape forming unit for forming the ring-shaped part by curving a portion of the wire rod supplied from the wire rod supply unit,
wherein the ring shape forming unit forms the binding material by successively forming a plurality of ring-shaped parts in the wire rod supplied by the wire rod supply unit, arranging the plurality of ring-shaped parts along a longitudinal direction of the object to be bound, and coupling adjacent ring-shaped parts, of the plurality of ring-shaped parts, to each other along the longitudinal direction of the object to be bound.

2. The wire harness binding apparatus according to claim 1,
wherein the ring shape forming unit
forms a first ring-shaped part by curving a portion of the wire rod, forms a second ring-shaped part by curving another portion of the wire rod, and repeatedly forms the first ring-shaped part and the second ring-shaped part, and
couples the plurality of ring-shaped parts to each other by coupling the first ring-shaped part and the second ring-shaped part that are adjacent to each other.

3. The wire harness binding apparatus according to claim 2,
wherein the ring shape forming unit
couples the first ring-shaped part and the second ring-shaped part by inserting the second ring-shaped part into the first ring-shaped part, and
couples the second ring-shaped part and the first ring-shaped part by inserting the first ring-shaped part into the second ring-shaped part.

4. The wire harness binding apparatus according to claim 3,
wherein the ring-shaped part former
forms the second ring-shaped part coupled to the first ring-shaped part by pulling out a portion of the wire rod so as to insert the portion into the first ring-shaped part formed in the wire rod, and
forms the first ring-shaped part coupled to the second ring-shaped part by pulling out a portion of the wire rod so as to insert the portion into the second ring-shaped part formed in the wire rod.

5. The wire harness binding apparatus according to claim 4,
wherein a first direction refers to a direction intersecting the longitudinal direction of the object to be bound,
a second direction refers to a direction intersecting the longitudinal direction of the object to be bound and also intersecting the first direction,
the ring shape forming unit and the wire rod supply unit
are configured to move a predetermined distance in the longitudinal direction of the object to be bound each time the ring shape forming unit and the wire rod supply unit move back and forth once in the first direction,
form the second ring-shaped part coupled to the first ring-shaped part on one side of the object to be bound in the first direction, and
form the first ring-shaped part coupled to the second ring-shaped part on another side of the object to be bound in the first direction,
the ring shape forming unit moves back and forth in the first direction by passing one side of the object to be bound in the second direction, and
the wire rod supply unit moves back and forth in the first direction by passing another side of the object to be bound in the second direction.

6. The wire harness binding apparatus according to claim 5,
wherein the ring shape forming unit and the wire rod supply unit are capable of changing a distance of movement in the longitudinal direction of the object to be bound each time the ring shape forming unit and the wire rod supply unit move back and forth once in the first direction.
